# EUROPEAN PATENT SPECIFICATION

(11) **EP 3 939 810 B1**
(45) Date of publication and mention of the grant of the patent: **15.10.2025**
(21) Application number: 20186438.6
(22) Date of filing: 17.07.2020
(51) Int. Cl.: B60G 7/00

(54) **SPRING LINK FOR A VEHICLE SUSPENSION**
FEDERLENKER FÜR EINE FAHRZEUGAUFHÄNGUNG
BRAS DE SUSPENSION À RESSORT POUR UNE SUSPENSION DE VÉHICULE

(43) Date of publication of application: 19.01.2022
(73) Proprietor: Raufoss Development AS, 2830 Raufoss (NO)
(72) Inventor: BOSCA, Renata, Montreal H4V 1Z1 (CA); FRESVIK, Bjorn Ivar, 2860 Hov (NO); HOEILAND, Thorbjoern, 2818 Gjovik (NO)
(74) Representative: Leinweber & Zimmermann

(56) References cited:
- EP-A1- 1 642 754
- EP-A1- 3 498 504
- CN-U- 204 278 962
- DE-A1- 102004 043 339
- DE-A1- 102011 000 462
- DE-C1- 19 614 246
- KR-A- 20080 011 502
- US-A- 2 611 625

## Description

The invention relates to a spring link for a vehicle suspension. A spring link's main function is to guide a wheel in a wheel suspension and to transmit all forces acting on a wheel during the operation of a vehicle to the car body via shock absorbers and springs.

Since such spring links are exposed to strong (mostly axial, but also vertical, with reference to the spring link) forces during steering manoeuvers or by driving on uneven road surfaces, it is of importance that the spring link has a high rigidity or stiffness to guarantee the required stability of the component. Namely, in case of a too low stiffness, forces exceeding the stiffness limits could result in a deformation of the spring link and could negatively affect the stability and functionality of the spring link.

In particular, the invention is directed to a spring link for a vehicle suspension, comprising: an elongated base body extending along an axial direction (x) and having an essentially U-shaped cross section and an areal bottom extending along an axial-transversal xy-plane, a wheel-side mounting portion and a vehicle-side mounting portion at respective axial end portions of the base body, and a spring seat for spring/damping means defined at a transversely (y) outwardly bulged middle portion of the base body.

Several spring links and designs thereof are known. One type of a spring link is made of an elongated hollow connector with cross-section in form of a closed profile, for instance of rectangular form, where a seat for the spring/damping means is situated on an upper side wall of the closed profile. However, the relevant distance to the road surface being given by the height position of the lower (bottom) wall of the profile, a problem arises in having both a sufficiently large distance of the spring link from the road surface as well as freedom regarding the selection also of spring/damping devices with a larger length in its damping direction.

In order to overcome such disadvantages, solutions were proposed to have the seat for the spring and/or damping means placed on the bottom side of the spring link. To this end, an opening would be made in the top side of the closed profile. The stiffness increasing top side could f.i. be formed by a separate part, as disclosed in DE 10 2014 226 242 A1, said part being mounted in the region of the spring seat being defined by a cylindrical protrusion of the bottom side creating a ring bottom for receiving the spring.

Further, attempts were made to completely omit the top side of the closed profile, arriving at such a U-shaped profile. This is disclosed, for instance, in DE 10 2006 032 595 A1. Therein, the stiffness of the spring link is set to be provided by an outwardly everted spring seat and by outwardly bent side walls at their top side.

Other solutions are known, for instance disclosed in DE 10 2004 008 957 A1 where the spring link, although having a generally U-shaped base profile, has additional crescent-shaped elements connecting both side walls at their top side to further increase the stiffness, thereby renouncing a completely open profile.

A further spring link is known from DE 10 2017 117 309 A1. The spring link shown therein has side walls extending essentially orthogonally from the bottom and being essentially uniform over the bulged middle portion.

In DE 10 2008 013 182 A1 it is disclosed that by having some kind of twisted structure, namely the U-shape inversed at one end of the spring link with respect to the other end, leading to an increase in the stiffness.

DE 10 2012 025 034 A1 discloses a structure of the spring link where the aerodynamic of the spring link is improved by a structure which is open transverse to the axial extension of the spring link.

In EP 3 498 504 A1, a spring link with similar structural elements as in the above-mentioned DE 10 2006 032 595 A1 is disclosed. According to EP 3 498 504 A1, holes located in a special way in the side walls of the U-shaped body are arranged for coupling the spring link to a cover.

US 2,611,625 A discloses a front wheel suspension coupled as a unit to the vehicle frame, with a lower control arm which does, however, not have a transversely outwardly bulged middle portion of its base body where the spring seat is arranged.

DE 196 14 246 C1 discloses spring links for vehicles, and proposes a bayonet joint coupling of the part which forms the seating surface to the spring link with radial protrusions and bayonet joint cuttings, as well as stepwise formed counter seating of the bayonet joint.

EP 1 642 754 A1 discloses a suspension arm having a horizontal rib connecting its two vertical walls and a bottom level increase versus its axial ends.

DE 10 2011 000 462 A1 discloses a helical spring seat for a spring/spring link connection, and additional damping means between the spring and one axial end of the spring link.

KR 2008 0011502 A discloses a spring link according to the preambles claims 1, 2 and 3 respectively and describes a specific aluminium alloy to achieve extrudability for a an aluminium alloy extruded profile member as spring link, and a level increase of the bottom plate of the spring link versus its axial ends.

CN 204278962 U discloses a spring vibration isolation pad and lower swing arm connection positioning structure to position the pad in the arm. To this end, positioning protrusions are arranged in a semi-circle to match positioning grooves of the isolation pad.

While nearly all of the above-discussed documents aim to improve the stiffness of the spring link, in particular also by outer flanges of the side walls of the U-shaped body, notwithstanding the respectively achieved stiffness, the inventors identified possible problems of such spring links in long-run applications.

It is an object of the invention to provide a spring link providing for a satisfying compromise regarding sufficient fatigue resistance while still having sufficient stiffness without excessive weight, and with still reasonable simplicity of fabrication.

This object is achieved by the invention by providing a spring link with the features of claim 1, a spring link according to claim 2 and a spring link according to claim 3 . Among other it is provided that a (first) topological quantity defined by the number of segments of a path providing change of sign of curvature is at least two, preferably at least four, said path being defined by a cylindrical section of the bottom with corresponding cylinder axis being orthogonal to the xy-plane and going through the center of the spring seat and with corresponding cylinder diameter being a quarter of the transversal bottom width at said center, for claim 1, while for claim 2 the topological quantity is at least 6 and holds for the corresponding cylinder diameter being a third of the transversal bottom width at center.

Namely, the inventors discovered that, although several measures in the prior art to increase the stiffness of the spring link is achieved, the load reception and distribution in use of such spring links leads to a weakness in fatigue resistance in particular in the crossover from the bottom into the side walls of the body. While generally, sufficient fatigue resistance can be encountered by improving the thickness of the material in particular in the most affected portions of the spring link, the inventors provide for a better fatigue resistance not by increase of material but via the topological structure of the bottom by having the above-defined topological quantity of at least two, preferably at least four.

By such topological modification of the areal bottom of the spring link in the region encompassing the spring seat, receipt and distribution of load is modified reducing effects negatively affecting the fatigue for the spring link. The spring seat is the area where the spring/damping means is arranged in the spring link, either directly or, according to a later described preferred embodiment, via an interfacing spring pad. Preferably, such topological property is present not only for the corresponding cylinder diameter of at least half of the transversal bottom width at said center, but also for a corresponding cylinder diameter being at least 60%, in particular at least 70% of said width, while according to a preferred embodiment, even at the crossover from the bottom to the side walls of the U-body, the topological quantity may be present and may be two or more.

In a preferred embodiment, a second topological quantity defined by the ratio ΔA:Ap of the area difference (ΔA) between the surface (A) of the bottom and the projection (Ap) of said surface (A) onto the xy-plane to said projection (Ap) is at least 2%, preferably at least 3%. Thereby, the fatigue resistance is further improved.

Envisaged are also more than 4%, further more than 6%, in particular more than 8%, even more than 12% or even more than 15% for the second topological quantity.

In further envisaged embodiments, said ratio holds with these thresholds also when said ratio ΔA:A_{P} is limited to the bulged middle portion of the bottom.

At least one imprint located in the bottom contributes to the topological quantities. Preferably, such imprint is manufactured by press-hardening, in particular together with the forming of the spring link, although also other forming techniques are envisaged, as molding.

In a further preferred embodiment, at least one imprint is provided with a length extension larger than its width and/or depth. Additionally and/or alternatively, imprints may be provided in form of having length and width in the same order of magnitude, such as diamond imprints or similar, and/or sequences thereof.

In a further preferred embodiment, at least such an imprint has a length extension of major direction component in transveral (y) direction. Such imprint may, but need not reach from one side wall to the other. It can, but does not need to be directed straight in transversal direction orthogonal to the axial extension direction x of the spring link.

In an envisaged embodiment, there is at least one imprint extending radially from the center of the spring seat, preferably a plurality thereof. In particular, among those radially extending imprints, in one embodiment it is provided that at least one imprint extends in axial direction, in particular centrally with respect to the transverse direction (y).

Irrespective of the presence of other imprints, at least one imprint extends in axial direction, in particular centrally with respect to the transverse direction.

In a further preferred embodiment, a plurality of imprints run along the axial direction (stripe configuration). In case of an impair number of such plurality, it is preferred that one of them runs centrally along the axial central line of the spring link. Such central imprint may have one or more additional imprints running in parallel, in particular one additional imprint to each side. In an alternative embodiment, f.i. two imprints may run along the transversal borders of the bottom.

In a preferred embodiment, at least one imprint extends over more than 40% of, preferably more than 60% of, further preferably more than 75% of, in particular over the full axial length of the bottom. One or more imprints may also have an axial extension of that of the bulged middle portion or less.

In particular in such configurations, it is envisaged that the width extension of in particular the central axial imprint may widen out versus one or both axial portions of the spring link.

In an alternative or additional way, at least one imprint may extend in transverse direction, in particular located at one end of the bulged middle portion. Preferably, it is arranged at said end, where there is no additional reinforcement due to the mounting of a shock absorber, but also at both ends of the bulged middle portion, such transversely extending imprint can be provided.

In a preferred embodiment, the imprints form an imprint arrangement which is in particular symmetrical to the central axis in axial direction (x), to symmetrisize load distribution. Preferred embodiments can comprise a stripe-shaped (at least 2 essentially parallel imprints) or star-shaped (sub-)configuration, also a spider-web (sub-)configuration is envisaged.

While in an envisaged embodiment, the imprints are bulged out versus the inner of the U-body, also outwardly extending imprints are considered, or a combination thereof.

In some preferred embodiments, the depth of one or more imprints can be lower than the (material) thickness of the areal bottom (in the region where the imprint is arranged), even lower than 2/3 thereof, even lower than 40% thereof.

In some other preferred embodiments, said depth may be larger than said thickness, even twice or three-times the thickness, but preferably lower than 6 times, preferably than 5 times said thickness.

In a preferred embodiment, one or more imprints have a width to depth ratio of larger than 0.6, preferably than 0.8, in particular than 1.0, even 1.5, and/or lower than 2.0, preferably than 16, in particular than 12. These provide for a reasonable combination of fatigue resistance improve and ease of manufacture.

The depth of one or more imprints may be larger than 3% of the overall height of the spring link. Also depths of more than 6%, even more than 10% are envisaged.

As already indicated above, for instance for several star-shaped configurations and/or spider-web configurations, it can be provided that the topological quantity is at least 6, preferably at least 8, more preferred at least 10, even 12 or more. Said topological quantity may hold also for a corresponding cylinder diameter of at least preferably a third or half, preferably 65%, more preferably 80%, even at 100% of the transversal (y) bottom width at center.

In this regard, it is also envisaged that a third topological quantity defined by the number of segments of a path providing change of sign of curvature is at least two, preferably at least four, more preferred at least six, in particular eight or more, the path for the third topological quantity being defined by a section of the side walls of the U-body with the xy-plane at the crossover from side wall and bottom in the region of the spring seat.

In a non-claimed example, a spring pad is provided forming an interface for the spring seat of the spring link according to any of the preceding aspects, having a lower surface profile matching at least partially to the profile of the spring seat of the spring link by means of an at least partly complementary profile.

So it is preferred that at least over 20% of the lower surface facing the bottom of the spring link is in complementary relationship to the bottom profile, in particular including the path segments providing the (first) topological quantity. More preferably, 40% or more have complementarity, more preferably 60% or more, even 80% or more.

Regarding the material of the spring pads, a resin is preferred as base material thereof. The resin may be fiber-reinforced, in particular glass fiber reinforced. As resin, resins used for high mechanical strength, stiffness, and toughness applications are preferred, such as resins consisting of or containing polyester and/or polyamide. Preferred is in particular a polyamide base material, f.i. polyamide 66 (nylon). In particular preferred are materials requiring a stress of more than 20MPa, more preferred more than 40MPa, in particular more than 60MPa for a strain of 1%.

When fiber-reinforced, a fiber content of more than 15%, in particular more than 20% is preferred, whereas the fiber content should not exceed 50%, in particular not 45%.

In a preferred embodiment, a skin of rubber might be applied between the base body 11 at the spring seat and the spring pad, which skin of rubber can be an outer layer of the spring pad, f.i. by being casted on the base material of the spring pad.

Regarding the assembly of spring pad and (base body of) spring link, the spring pad may (just) be placed on the bottom of the spring link in the region of the spring seat, while rotation between spring link and spring seat is avoided by suitable means, which can be simply the corresponding shape of the lower side of the spring pad with respect to the profile of the imprint arrangement of the bottom of the spring link. Further, a preferred embodiment is a press fit between spring pad and spring link, in particular setting up friction and mechanical constraints, f.i. involving the dog clutch concept. By such press fit, a common structural integrity is established, which can optionally be further developed into symbiotic functions of common physical behavior. In this regard, it is envisaged that one or more physical properties of the materials of spring link and spring pad differ by less than 30%, in particular less than 20%. These properties may contain thermal expansion, resistivity against flexural bending or linear or shear forces.

Further, a connection by a casting, or vulcanizing, or gluing process can provide for the connection between spring pad and spring link. In particular, a welding connection via a rubber layer is envisaged.

The upper surface of the spring link may be flat, but can also have a ring-like groove, in particular with a circumferentially decreasing depth such that the bottom of the groove is helically formed.

The invention is also directed to a spring link assembly comprising such a spring link according to any of the previous aspects and such a spring pad, in particular connected to each other via a press fit.

In some embodiments, the spring link has at least one more mounting portion, in particular in form of openings in the inner side walls, for mounting additional components of the vehicle suspension. This allows easy mounting not only at the wheel-side and vehicle-side, but also of optional additional components.

Preferably, the spring link base body as described above is of one piece and/or made from aluminum or an aluminum alloy. This allows quite lower weights of the link and, therefore, advantages conferred to vehicles having such spring links. In particular, a 2000 series alloy, a 4000 series alloy, a 5000 series alloy, a 6000 series alloy, or a 7000 series alloy may be used. Among these, aluminum alloys of the 6000 or 7000 series are most preferred, for instance one could use special aluminum alloys having specification 6060 or 6082, giving, from the material selection point of view, a good relationship between stiffness and weight. A thickness of the overall bottom/the cross-sectional profile in the range 2.8 mm to 7.2 mm is then preferred (for steel, 1.4 mm to 3.2 mm may be sufficient)

Preferably, the spring link has a stiffness against axial compression in the axial direction of more than 24 kN/mm, in particular of more than 28 kN/mm, and /or a stiffness in height direction of more than 4.4 kN/mm, in particular more than 5.2 kN/mm. In particular, for intended use for passenger cars, stiffness values against axial compression are preferred to be larger than 30 kN/mm (axial) and 7 kN/mm (vertical), while, by suitable scaling up in length and cross-sectional area, for trucks stiffness values of 38, preferably larger than 44, in particular larger than 48, and/or height direction stiffness of 8, preferably larger than 12, in particular larger than 16 are preferred, each in kN/mm.

Further, the invention is directed to a vehicle suspension having a spring link with one or more of the above-mentioned features, as well as a (motor-driven) vehicle having such a spring link.

Regarding manufacturing of the spring link (respectively its elongated base body), it is preferred that one manufactures the spring link in one piece, and from one piece. Starting materials can be pieces of sheet material of flat surface or, having already preformed wave structure in the material, to facilitate bending operations to obtain the cross-sectional form of the spring link. It is also envisaged to perform forming steps on the sheet-like material of a length larger than the length of the spring link, and to obtain two or more spring links by cutting the sheet material at some stage. Accordingly, the manufacturing steps to arrive at the spring link may contain bending operations (hot or cold stamping), cutting operations and also drilling operations. A preferred manufacturing method is press-hardening, however, the invention is not limited thereto. Rather, all kinds of manufacturing processes and thermal treatments can be applied to obtain the spring link, for instance one could start out with an extruded part, thereafter brought by forming/bending into final shape of the spring link. For the forming process semi-hot forming or hot forming is preferred.

Further, the spring link is preferably made without any welding operation, for simplified manufacturing. In particular, it has no connections between the upper ends of its side walls attached to the base body.

The connection of the spring link within the vehicle suspension can be made via rubber or rubber/metal bearings, and clamping for instance by screws, but can be generally done according to the usual techniques in the art.

Further features, details and advantages of the invention are described below with reference to the enclosed figures, wherein
- Fig. 1: shows a spring link of a first embodiment in several views.
- Fig. 2: shows a spring link of a second embodiment in several views.
- Fig. 3: shows a spring link of a third embodiment in several views.
- Fig. 4: shows a spring link of a fourth embodiment in several views.
- Fig. 5: shows a spring link of a fifth embodiment in several views.
- Fig. 6: shows a spring link of a sixth embodiment in several views.
- Fig. 7: shows a seventh embodiment in a perspective view.
- Fig. 8: shows an eighth embodiment in several views.
- Fig. 9: shows a spring pad and its combination with a spring link of the embodiment of Fig. 2.
- Fig. 10: is a view showing also a spring and a shock absorber.

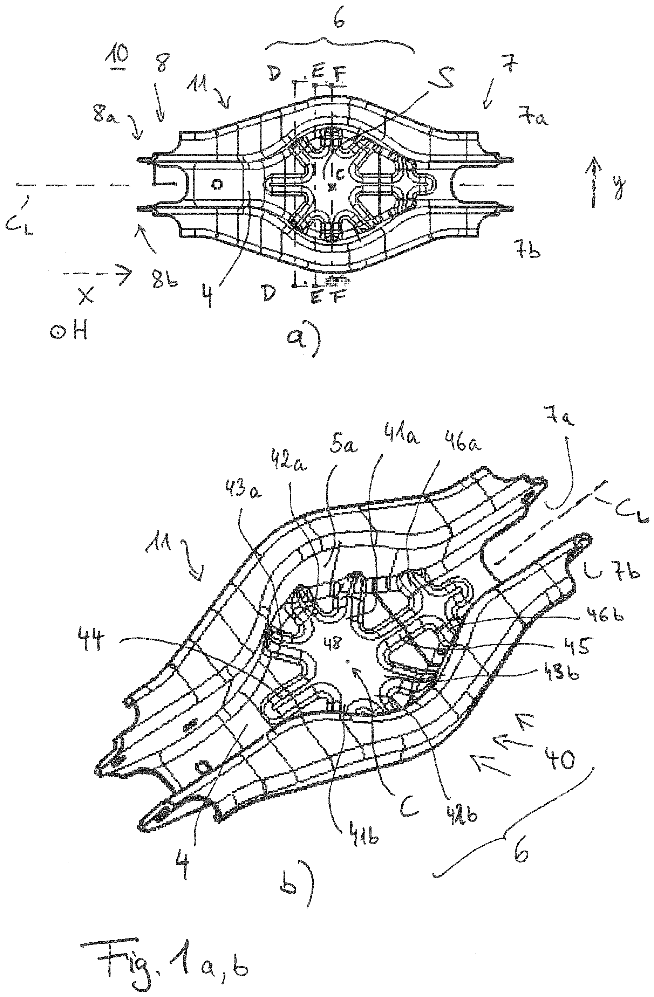

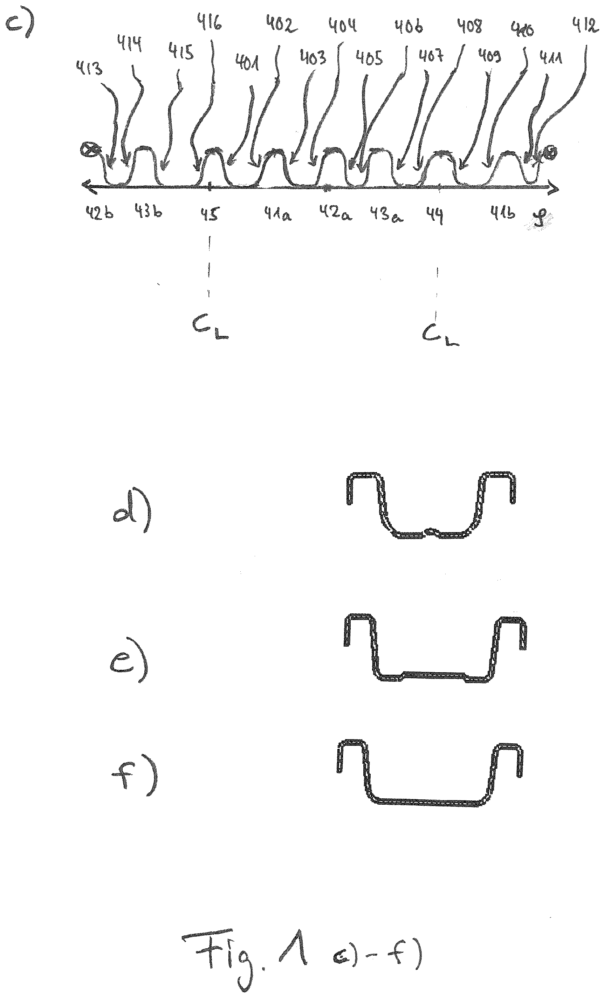

The embodiments of Figs. 1, 6, 7 and 8 do not belong to the claimed invention but may be useful for the understanding thereof.
In the top view of Fig. 1a, a first embodiment of a spring link 10 is shown, which extends along an axial direction x. The center line C_{L} of spring link 10 runs along axis x. For preferred versions, the center line C_{L} forms together with the height direction H (corresponding essentially to the damping axis) at center C and, in Fig. 1a, perpendicular to the paper plane, a symmetry plane for spring link 10.

In Fig. 1 to the right, one recognizes wheel side mounting portions 7a, 7b, and on the left side vehicle side mounting portions 8a, 8b, while the U-shaped form of the elongated base body 11 of spring link 10 is better seen in the perspective view of Fig. 1b. In a middle portion 6 of the spring link 10 as seen in axial direction, the base body 11 is bulged outwardly in transverse direction y, thereby forming a spring seat S as usually and known for the skilled artisan, such that the bulged middle portion 6 is capable of receiving a cylinder-like structure with f.i. a diameter as that of the transverse dimension bottom 4 of spring link 10 at maximum bulging. The center of spring seat S has the reference numeral C. It is on the center line C_{L} and at or close to maximum bulging.

The bottom 4 of the base body 11 is not areal flat but profiled by means of an imprint arrangement 40. The imprint arrangement 40 comprises several connected elongated imprints 41a, b, 42 a, b, 43 a, b, 44, 45, and 46 a, b. As can be seen in Fig. 1, imprints 41a, 41b run along the same extension direction in the xy-plane, which is at approximately 45° versus the center line C_{L}. Imprints 42a, 42b run in transverse direction (width direction) y. Further, imprints 43a, 43b run along the same extension direction being at about 135° measured in the xy-plane. The imprints 41, 42, and 43 each connect the side walls 5a, 5b with each other, that is extend up to the crossover of bottom 4 and side wall 5 to connect to said side walls 5.

Imprints 44 and 46 each run along the axial direction x, extending from the center C to (in Fig. 1) the left and the right side. Close to its distal end of imprint 45, further imprints 46a, 46b extend essentially in transversal y-direction to connect to the side walls 5a, 5b at the begin of bulging portion 6, respectively at its end versus end portion 7 when seen from the center C. The end of imprint 45 extends axially beyond imprint 46a, b, such as to form with these imprints a form like a Christian cross.

The (first) topological quantity of said embodiment of the spring link 10 is 16, visualized in entire schematical (dimensions do not correspond) Fig. 1c, in which a cylindrical section of a cylinder centered at C with cylinder axis in direction H is rolled out and where the path segments providing the change of sign of curvature are denoted by 401-416. For instance for path segment 401 one recognizes a crossover from curvature (right curve to left curve) following the path from left to right in Fig. 1c. Fig. 1c is taken for a cylinder diameter for the cylindrical section being taken at 80% of the transversal bottom width at center, however, from Fig. 1 it is easily to recognize that the first topological quantity of 16 for said embodiment holds also for a corresponding cylinder diameter corresponding to the bottom width at center. Due to connection of imprints 41, 42, 43, 44, and 45, a star-like configuration is comprised in the imprint arrangement. Close to the center C, thereby a plateau 48 is formed, on a height level corresponding to the depth of the imprints, extending radially in the range of 30% to 50% of the transversal bottom width at center, for the subject embodiment shown in Fig. 1.

In the present embodiment, both side wall structures 5a, 5b are configured symmetrically to each other with respect to an axial center line C_{L} of spring link 10. However, the side wall structures need not to be identical in this regard, it is merely a preferred embodiment.

The mounting portions 7a, b, and 8a, b are provided in forms of through-holes at the axial end portions of side walls 5a, b of base body 11, as better visible in Fig. 1b. However, any other configuration of mounting portions could be used as eyes, protrusions, etc.

In the cross-sectional view of Fig. 1d (taken along D-D in Fig. 1a) one recognizes the form of imprint 44. From the cross-section of Fig. 1e taken along E-E in Fig. 1a, one recognizes the formation of plateau 48, while in the cross-sectional view of Fig. 1f taken along F-F in Fig. 1a, one recognizes imprints 42a, 42b extending up to the side walls. Further, one recognizes that the depth of the imprint is in the range of and even below the thickness of the bottom 4.

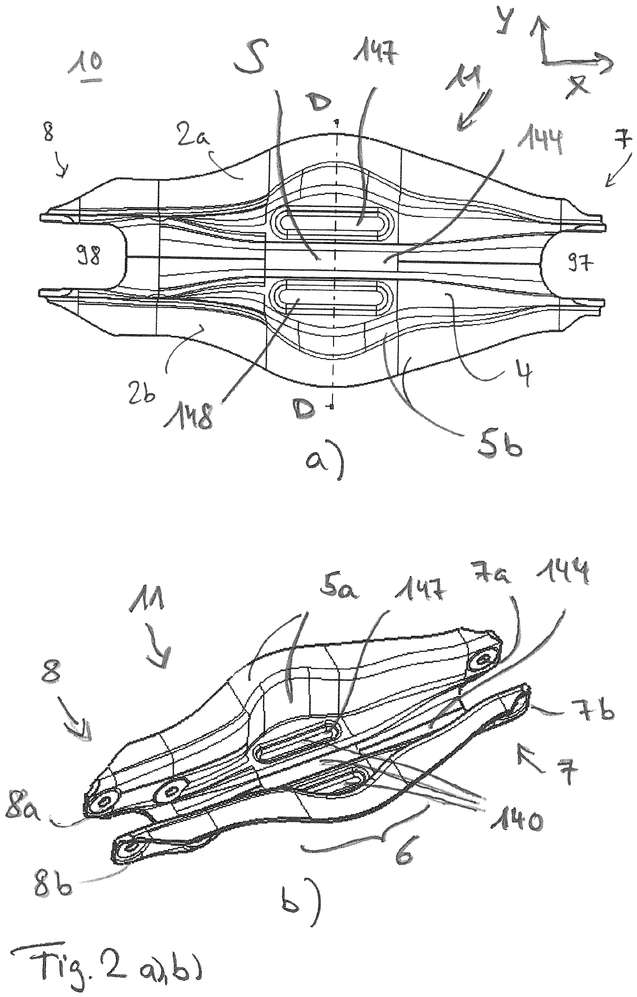

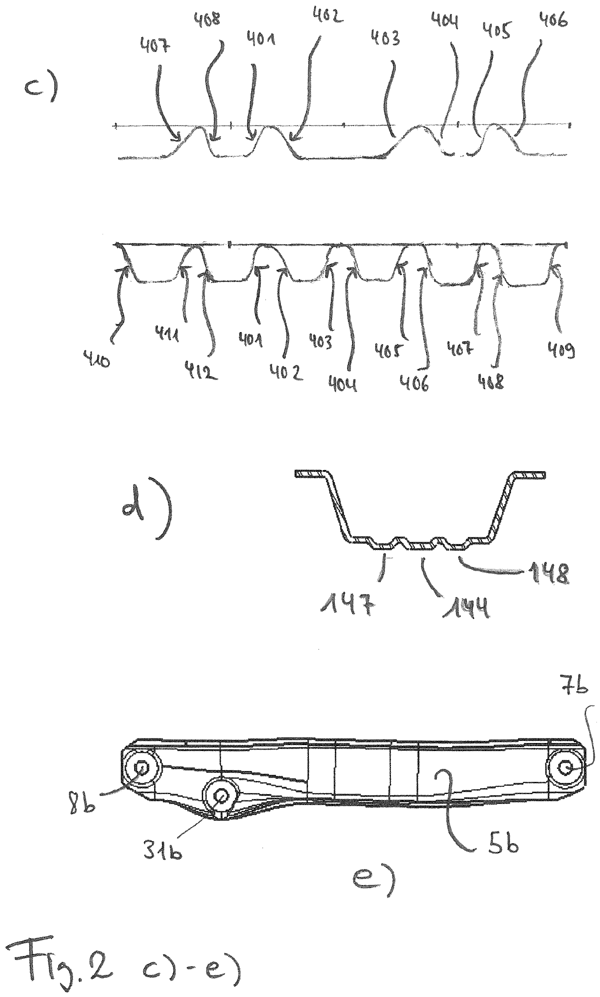

In Fig. 2, a second embodiment is shown. As can be seen from the perspective view of Fig. 2b, the overall shape of the spring link is similar to that of the embodiment of Fig. 1, such that elements like the elongated U-shaped base body 11, side walls 5a, b, mounting portions 7a, 7b, 8a, 8b, bottom 4 and spring seat S as well as center line CL and center of C of spring seat S are denoted with the same reference numerals.

The bottom 4 of base body 11 is not areal flat but profiled by means of an imprint arrangement 140. As one can better see from the top view of Fig. 2a, imprint arrangement 140 comprises several elongated imprints 144, 147, 148 being separated from each other. Imprint 144 runs along the center line over the full length of bottom 4 in axial direction X. The width in Y-direction of imprint 144 is constant in the bulged middle portion 6 and smoothly widens out towards both axial end portions 7, 8. Imprint arrangement 140 is, thus, stripe-like by having a form of two or more essentially parallel imprints.

Imprints 147 and 148 also run in X-direction parallel to imprint 144 but axially extend not as far as imprint 144, and are essentially arranged in the bulged middle portion 6.

The parallel arrangement of imprints 144, 147, and 148 can be seen in Fig. 2d being a cross-sectional view taken along D-D in Fig. 2a. One recognizes that in this embodiment imprints 144, 147, and 148 are imprints when seen from the inner side of the U-shaped base body 11, thus bulged versus the outside (while the imprints of the embodiment of Fig. 1 are imprints when seen from the outer side of U-shaped base body 11, bulged to the inside). Their depth is about the thickness of the bottom 4.

Fig. 2c is the "rolled-out" cylindrical section for a cylinder centered at C and having the cylinder axis in height direction H. In the upper representation, the diameter of the cylinder for the cylindrical section is about 60% of the transversal bottom width at center, and in the lower representation about 90% of said transversal bottom width at center. One recognizes a (first) topological quantity of 8 (path segments 401-408) for said upper representation, and a (first) topological quantity of 12 (path segments 401-412) in the lower representation.

Fig. 2e shows a side view of the spring link 10 of this embodiment, one recognizes side wall 5b and mounting portions 7b, 8b to the wheel side, respectively vehicle side and mounting portion 31b for mounting a shock absorber (not shown). The height extension of the spring link is essentially constant over the axial length of the spring link, but has a downward bulged out portion at about the mounting portion 31b for the shock absorber.

As best visible in Fig. 2a, the bottom does not extend in axial direction up to the end portions of side walls 5a, 5b, with respect to said end portions determining the overall length of spring link 10, cutouts 97 and 98 are formed at the axial end portions 7, 8.

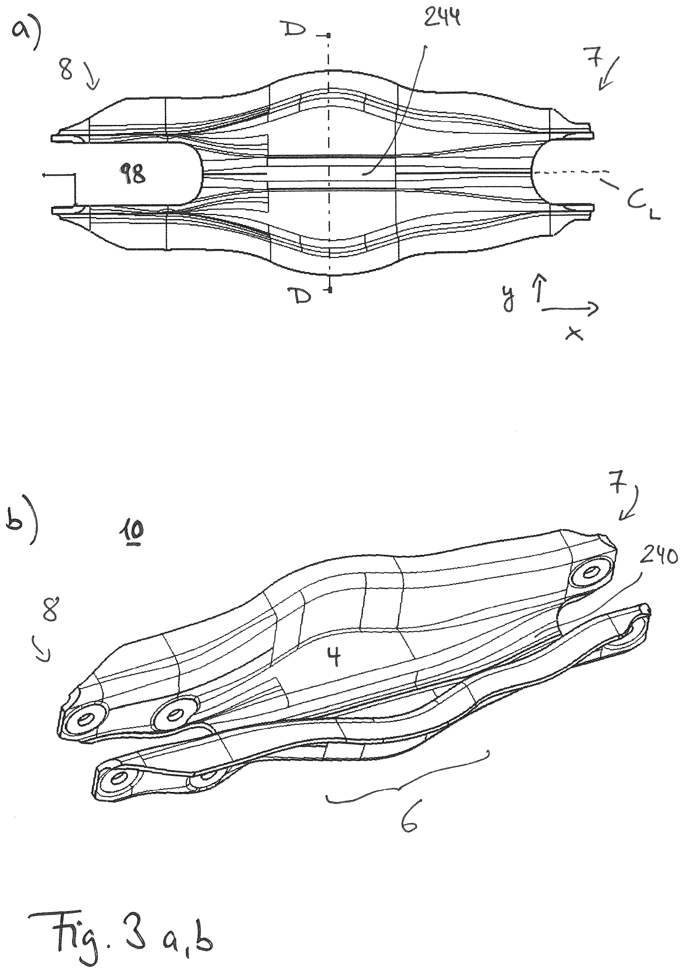

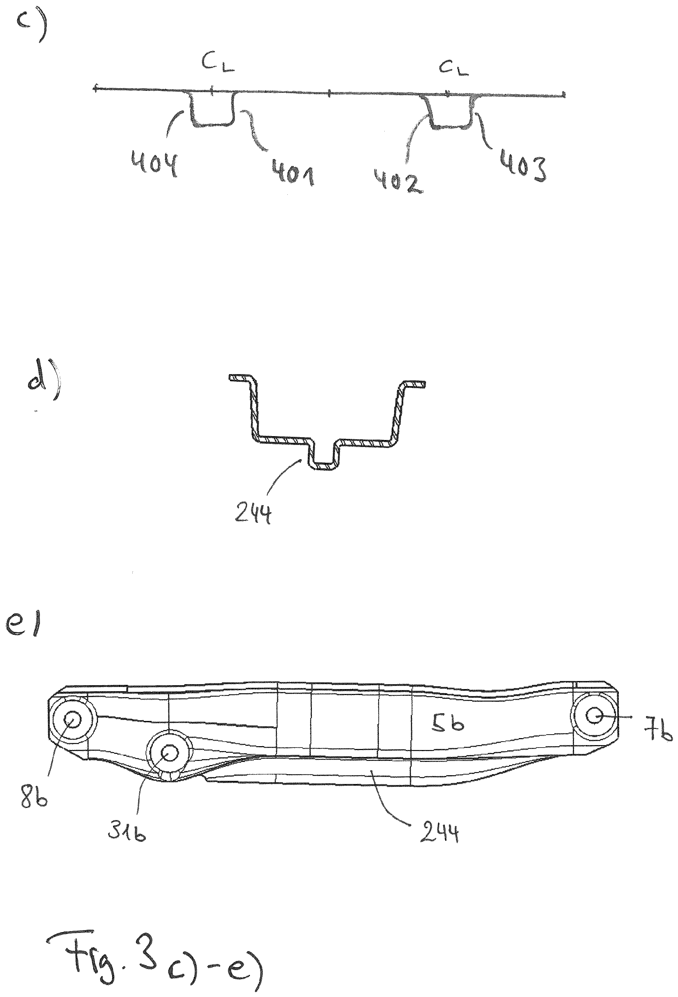

A third embodiment is now described with reference to Fig. 3. Although in said embodiment, the overall shape of spring link 10 is more slender than in the embodiment of Fig. 2, the overall shape of the base body of spring link 10 is still similar so that the same reference numerals are used to identify the same elements of the spring link.

As can be seen in Fig. 3a, cutout 98 is more extended in said embodiment and extends over more than half of the axial length of the portion between the bulged middle portion 6 and axial end portion 8. Moreover, the bottom 4 of the base body 11 is not areal flat but profiled by means of an imprint arrangement 240. Said imprint arrangement 240 is comprised of an imprint 244 running in axial direction X and being centered around center line C_{L}. In the bulged middle portion, the transversal width of imprint 244 is essentially constant, the shape thereof being visible from the sectional view of Fig. 3d. Here, the depth of the imprint is in the bulged middle portion of about three times the thickness of the bottom. Versus the axial end portions 7, 8, imprint 244 transversally widens out in a smooth manner to essentially reach the full bottom width at the axial end portions of the bottom. In this regard, the width variation along the axial extension is similar to that of the second embodiment of Fig. 2.

Moreover, as can be seen from a comparison of the side views of Fig. 3e and 2e the imprint 244 is deeper in height direction H and forms roughly 20-25% of the overall height of spring link 10.

The cylindrical section of a cylinder centered at C and with cylinder axis in height direction H and a diameter of 50% of the transversal bottom width at center is displayed in a "rolled-out" representation in Fig. 3c, one recognizes a (first) topological quantity of 4 (path segments 401-404).

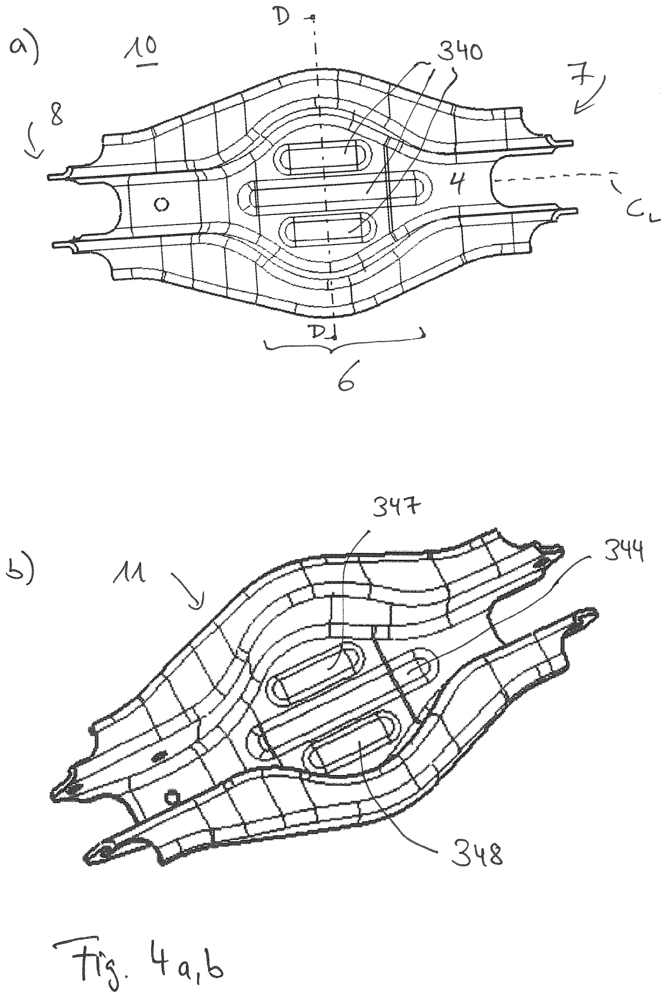

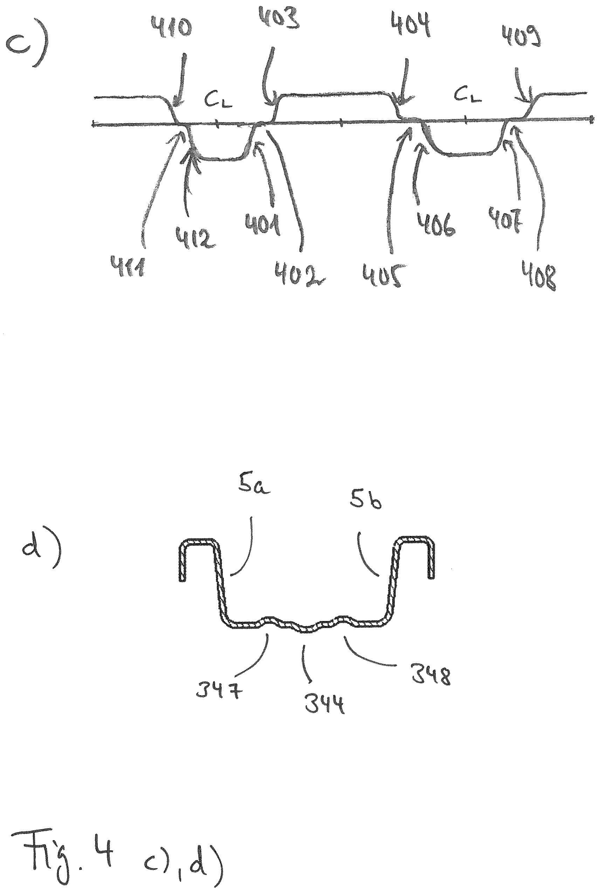

A fourth embodiment shown in Fig. 4 has an overall shape of the spring link very similar to that of the first embodiment of Fig. 1, as can be seen in Fig. 4b. The bottom 4 of the base body 11 of spring link 10 of the fourth embodiment is not areal flat but profiled by means of an imprint arrangement 340, which is, in the bulged middle portion 6, similar to imprint arrangement 140 of the second embodiment. However, the central imprint 344 does not axially extend up to the axial end portions of bottom 4, but essentially only between the portions where the side walls 5a, 5b start to bulge out to form the bulged middle portion 6.

The further imprints 347 and 348 of imprint arrangement 340 extend parallel to imprint 344 symmetrically to a transverse axis through center C but with an overall axial length of about only 50% of that of the central imprint 344. As is recognizable from Fig. 4d, being a cross-sectional view of a cross-section taken along D-D of Fig. 4a, one recognizes that the central imprint 344 is an imprint when seen from the inner side of the U-shaped base body 11 (that is, bulged to the outside), while imprints 347, 348 are imprints when seen from the outer side (that is, being bulged versus the inner side of base body 11).

In this regard, also the imprints of the aforegoing and subsequent described imprints do not need to be of one-type, but can contain both types of imprints (bulged to the inside/the outside) as in the fourth embodiment. Their depth can be as shown, about the thickness of the bottom 4, but also lower or higher, as it can be in the other embodiments.

The sectional view displayed in a rolled-out manner in Fig. 4c is a cylindrical section with the usual conditions as set out before, taken with a diameter of approximately 60% of the transversal bottom width at center, displaying a (first) topological quantity of 12 (path segments 401-412).

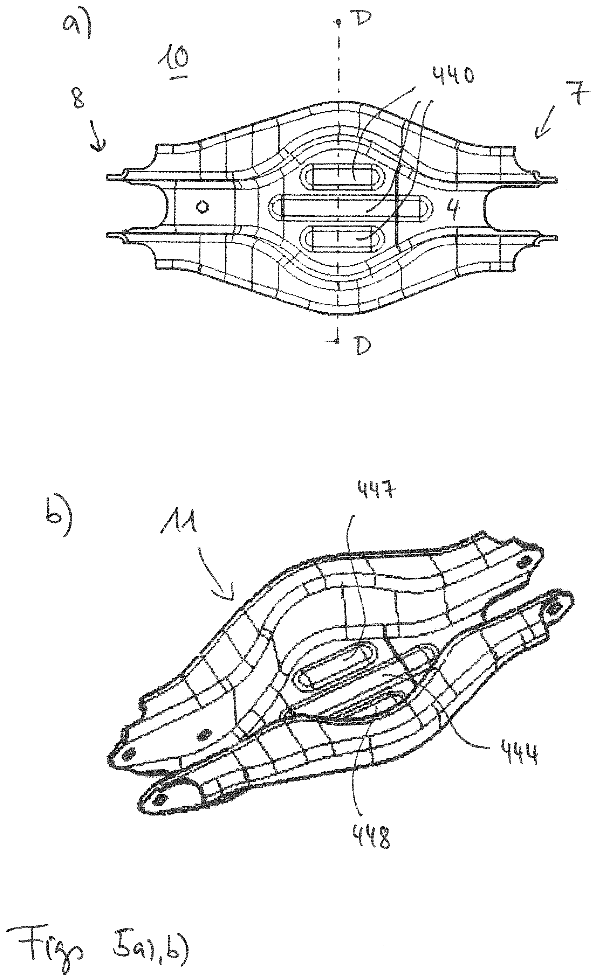

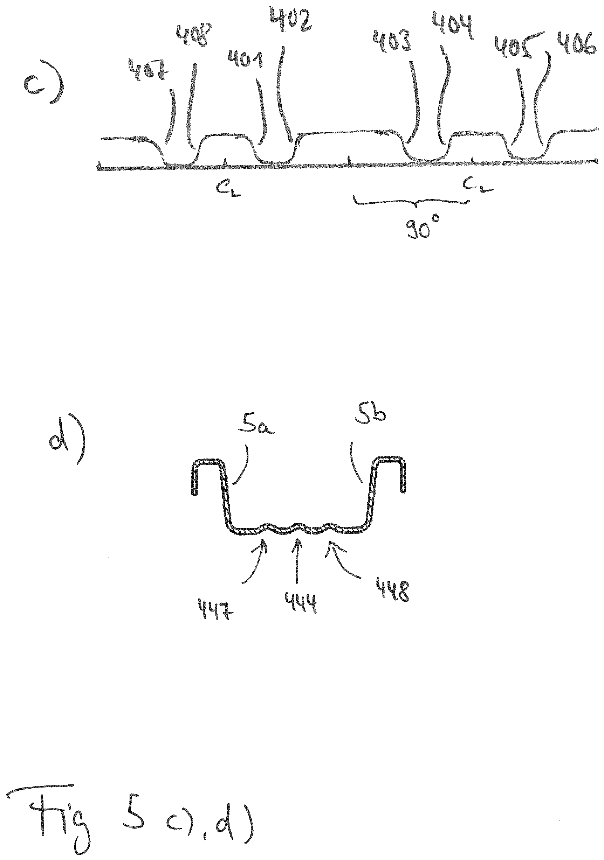

The fifth embodiment shown in Fig. 5 is similar to the fourth embodiment, but has all three imprints 444, 447, and 448 of imprint arrangement 440 in bottom 4 bulged to the inner side of the U-shaped base body 11, as is best visible from the cross-section of Fig. 5d taken along D-D in Fig. 5a. The representation of the rolled-out cylindrical section of Fig. 5c is for a diameter of 60% of the transversal bottom width at center, with (first) topological quantity of 8.

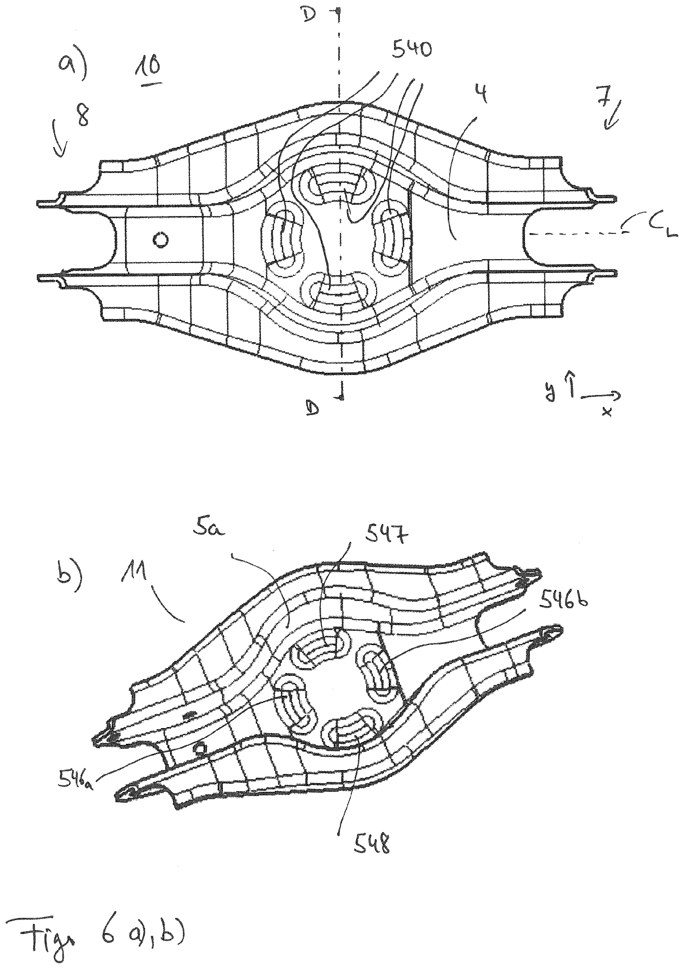

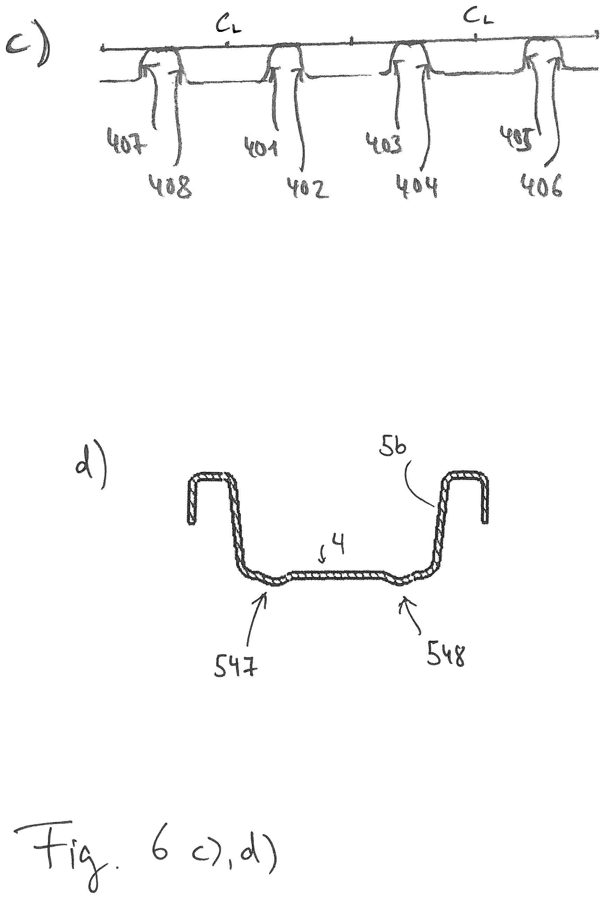

A sixth embodiment is shown in Fig. 6. Again, the same elements of base body 11 of the spring link 10 carry the same reference numerals.

The bottom 4 of the base body 11 is not areal flat but profiled by means of an imprint arrangement 540. As can be seen from the cross-section of Fig. 6d taken along D-D in Fig. 6a, the several imprints of imprint arrangement 540 are imprints seen from the inner side of U-shaped base body 11. Imprints 546a and 546b of imprint arrangement 540 extend essentially in transverse direction Y, but are, however, slightly curved. Imprints 547, 548 essentially extend in axial direction X, but are also slightly curved.

From Fig. 6c, the "rolled-out" cylindrical section taken for a diameter of the cylinder of approximately 75% of the transversal bottom width at center shows a (first) topological quantity of 8 (path segments 401-408).

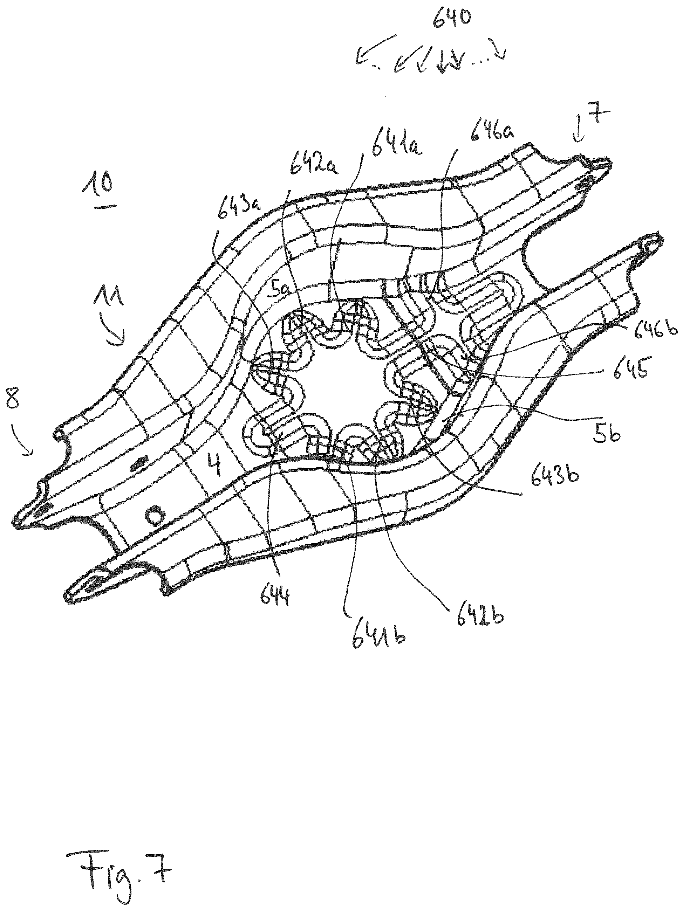

A seventh embodiment shown in Fig. 7 in a perspective view is very similar to the embodiment shown in Fig. 1. However, imprints 641a, b, 642a, b, and 643a, b of imprint arrangement 46 in bottom 4 of the spring link 10 of the seventh embodiment end already before the rising of side walls 5a, 5b. A cylindrical section taken for a diameter of 80% of the transversal bottom width at center, in correspondence to Fig. 1c, results in a (first) topological quantity of 16.

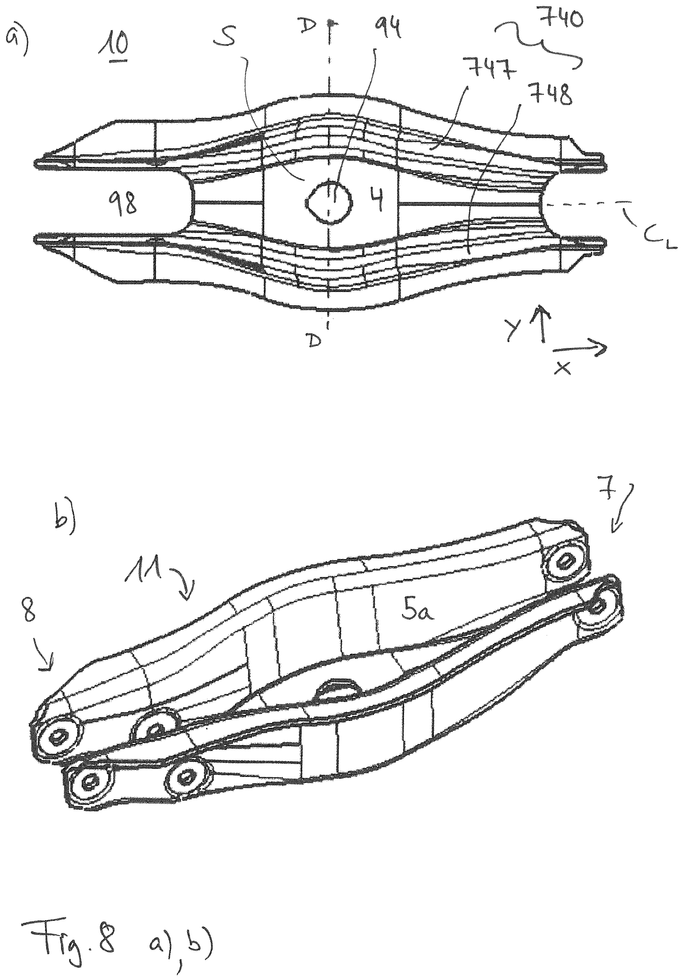

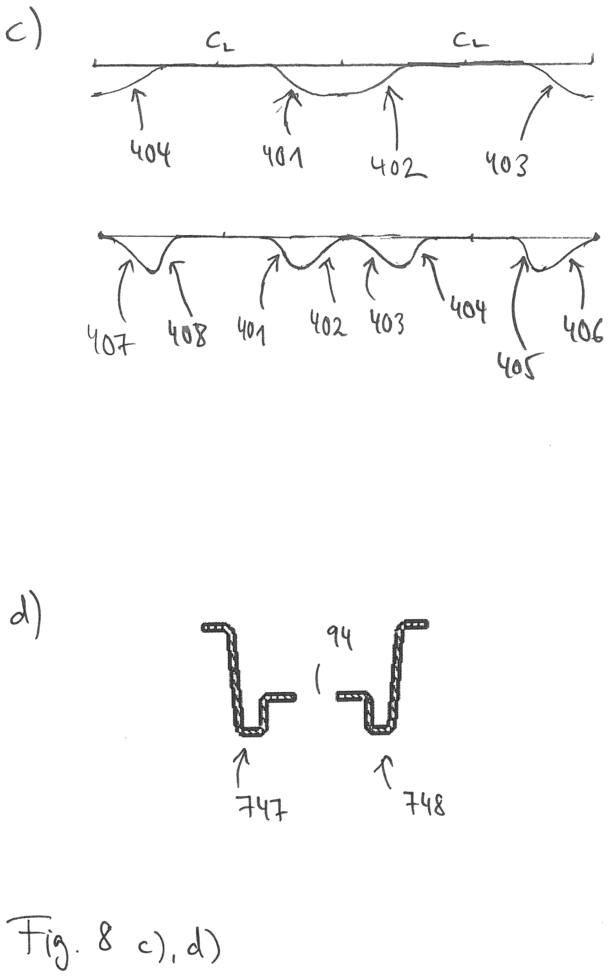

An eighth embodiment of a spring link is shown in Fig. 8. Again, similar elements of base body 11 of spring link 10 have the same reference numerals.

The bottom 4 of the base body is not areal flat but profiled by means of an imprint arrangement 740. The imprint arrangement 740 is symmetrical with respect to the center line C_{L} and comprises two imprints 747 and 748 extending over the full axial length of the bottom 4 with essentially constant width in width direction Y. Imprints 747 and 748 are formed at the longitudinally lateral borders of bottom 4 and display, thus, also a transversal bulging as can be seen best in the top view of Fig. 8a. Around the center C of spring seat S, a hole 94 is formed.

Cylindrical sections shown in Fig. 8c for diameter of 75% (upper representation) and 100% (lower representation) of bottom transversal width at center C show a (first) topological quantity of 4 corresponding to path segments 401-404 (upper representation) and 8 corresponding to path segments 401-408 (lower representation).

From the cross-sectional view of Fig. 8d taken at D-D of Fig. 8a, one recognizes a depth of imprints 747 and 748 in height direction at center being roughly 25% of the overall height of spring link 10. However, the depth may be different, and also in the range of about the thickness of the bottom in the bulged middle portion or lower.

In a further (not shown) embodiment, imprints 747 and/or 748 could extend over less than the full axial length of bottom 4, for instance over 60-120% of the axial length of the bulged middle portion 6.

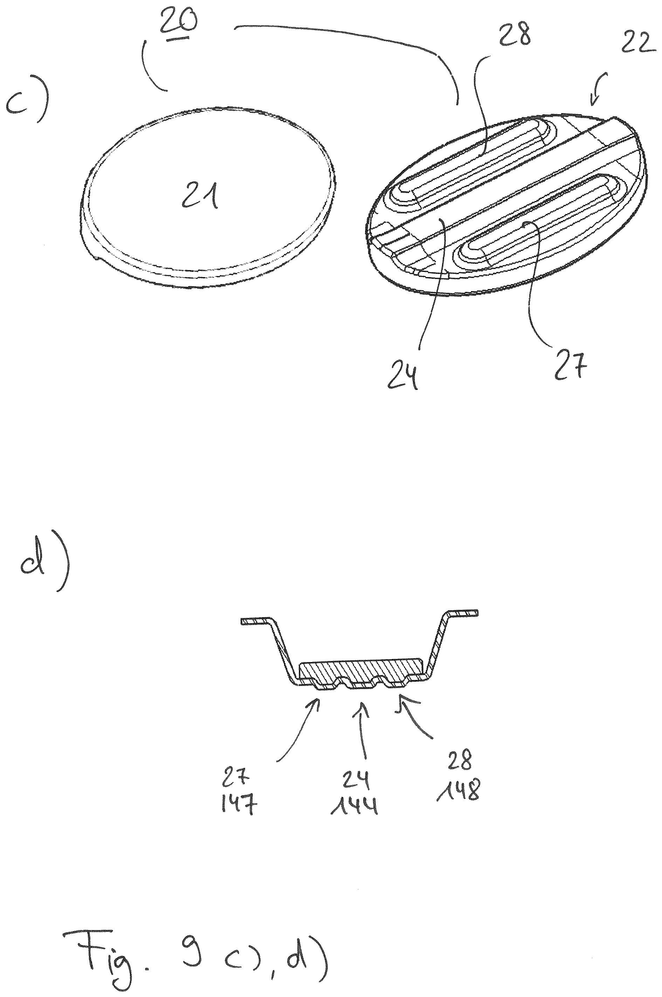

In a further embodiment of the invention, spring link 10 according to the second embodiment of Fig. 2 is combined with a spring pad 20 separately shown in Fig. 9c with its upper side 21 visible in the left and its lower side 22 in the right representation.

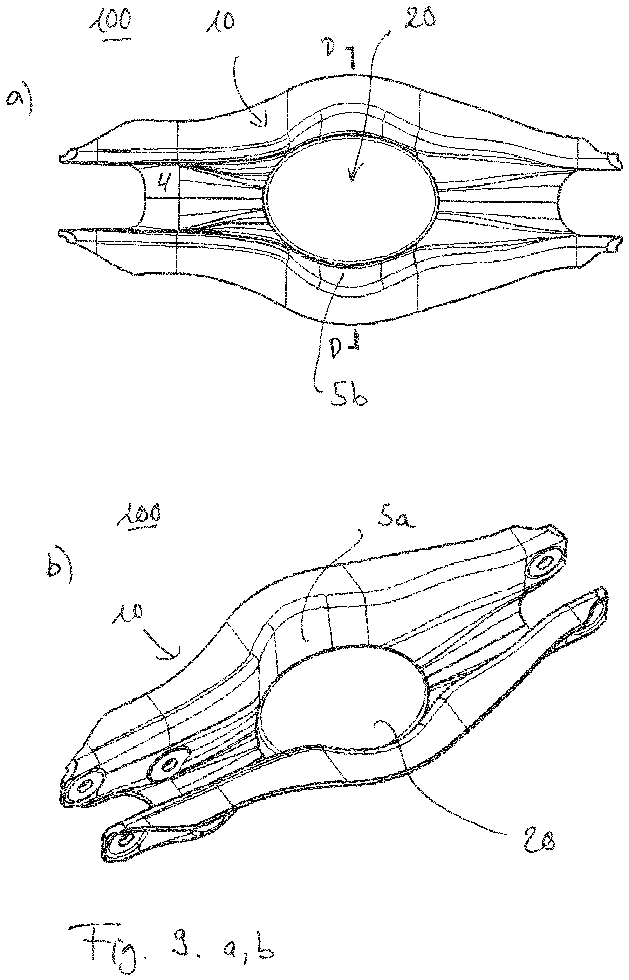

Said spring pad 20 has a form at its lower side/underside 22 which is the complementary form to the imprint arrangement 140 in the middle portion 6 of spring link 10. Accordingly, there is a central rib 24 matching to imprint 144, and two lateral ribs 27, 28 matching to imprints 147 and 148 shown in Fig. 2a, such that a press-fitting is possible for mounting spring pad 20 to spring link 10 to arrive at the spring link arrangement 100 of Fig. 9a, b. The matching of profile and counter profile is visible also in the sectional view of Fig. 9d taken along D-D of Fig. 9a.

Thereby, the spring link arrangement 100 formed by spring link 10 and spring pad 20 having at least partly a form correspondence by complementary formed adjoining surfaces provides for even better stiffness and fatigue resistance. As can be seen best in Fig. 9b, the circumferential shape of spring pad 20 is adapted to the bulging of the side walls 5a, 5b in the middle portion 6 of spring link 10.

In this embodiment, spring pad 20 is made of glass fiber (20-40%) reinforced polyamide 66. There may be a rubber layer between the base body 11 and the spring pad, f.i. casted on the spring pad 20.

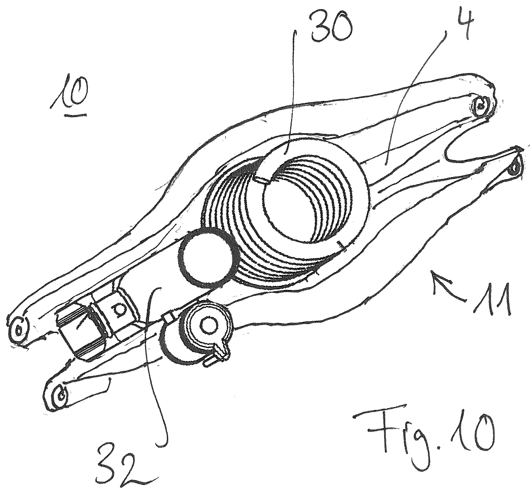

The spring link is shown in Fig. 10 with a spring 30 seated on seat S, while a shock absorber 32 is additionally provided between seat S and axial end 8, and mounted via additional mounting holes 31a, b (see also Fig. 2b, 3) in side walls 5a, 5b. Further mounting holes can be provided for additional elements, such as, for instance, a stabilizing bar. The feature of the imprint arrangements in the bottom 4/the topological quantities is similar to that of Figs. 2, 3, but Fig. 10 is to be understood in that any kind of bottom geometries as shown f.i. in Fig. 1a to Fig. 8 or others in accordance with claim 1 can be implemented.

As before, the length extension of spring link 10 goes along axial direction x. In the shown embodiment, axial center axis C_{L} is also a symmetry axis for bottom 4 and side wall structures 5. However, spring link 10 does not need to extend perfectly axially, such that the center line of spring link 10 may also be somewhat curved. That is, end portions 7 and 8 need not to be centered around straight axis x.

As can be seen from the embodiments, for the side walls at least one of the side wall structures 5, in the preferred embodiment both side wall structures 5, comprise an inner wall of the "U", a transversely extending flange portion at the top side opposite to the bottom side of inner wall, and may optionally comprise a further (outer) flange portion extending essentially in the height direction at its free end. It is also intended to have no outer flange portions, or outer flange portions with only low height extension, see f.i. Figs. 2d, 3d, 8d.

The invention is not limited to the details shown in the above embodiment. Rather, features of the above description as well as of the subsequent claims can be essential for the claimed invention alone or in combination.

## Claims

1. Spring link (10) for a vehicle suspension, comprising:
an elongated base body (11) extending along an axial direction (x) and having an essentially U-shaped cross section and an areal bottom (4) extending along an axial-transversal xy-plane
a wheel-side mounting portion (7a, 7b) and a vehicle-side mounting portion (8a, 8b) at respective axial end portions (7, 8) of the base body, and
a spring seat (S) for spring/damping means defined at a transversely (y) outwardly bulged middle portion (6) of the base body
wherein there is
a topological modification of the areal bottom (4) of the spring link (10) in the region encompassing the spring seat (S) by means of a topological quantity defined by the number of segments (410,....416) of a path providing change of sign of curvature being at least two, preferably at least four, said path being defined by a cylindrical section of the bottom with corresponding cylinder axis being orthogonal to the xy-plane and going through the center (C) of the spring seat (S) and corresponding cylinder diameter being a quarter of the transversal (y) bottom width at said center, wherein
at least one imprint (144; 244; 344; 444; 747, 748) located in the bottom (4) contributes to the topological quantity, with at least one imprint (144; 244; 344; 444; 747, 748) extending in the axial direction (x),
**characterized in that** an imprint (144; 244; 747, 748) extends over more than 40%, in particular more than 60% of the axial length of the bottom.

2. Spring link (10) for a vehicle suspension, comprising:
an elongated base body (11) extending along an axial direction (x) and having an essentially U-shaped cross section and an areal bottom (4) extending along an axial-transversal xy-plane
a wheel-side mounting portion (7a, 7b) and a vehicle-side mounting portion (8a, 8b) at respective axial end portions (7, 8) of the base body, and
a spring seat (S) for spring/damping means defined at a transversely (y) outwardly bulged middle portion (6) of the base body
wherein there is
a topological modification of the areal bottom (4) of the spring link (10) in the region encompassing the spring seat (S) by means of a topological quantity defined by the number of segments (410,....416) of a path providing change of sign of curvature being at least two, said path being defined by a cylindrical section of the bottom with corresponding cylinder axis being orthogonal to the xy-plane and going through the center (C) of the spring seat (S) and corresponding cylinder diameter being at least a quarter of the transversal (y) bottom width at said center,
wherein a plurality of imprints (344, 347, 348; 747, 748) running in the axial direction and forming an imprint arrangement with a stripe-shaped configuration are provided,
**characterized in that** for said stripe-shaped configuration said topological quantity is at least 6 and holds for the corresponding cylinder diameter being a third of said transversal (y) bottom width at center.

3. Spring link (10) for a vehicle suspension, comprising:
an elongated base body (11) extending along an axial direction (x) and having an essentially U-shaped cross section and an areal bottom (4) extending along an axial-transversal xy-plane
a wheel-side mounting portion (7a, 7b) and a vehicle-side mounting portion (8a, 8b) at respective axial end portions (7, 8) of the base body, and
a spring seat (S) for spring/damping means defined at a transversely (y) outwardly bulged middle portion (6) of the base body
wherein there is
a topological modification of the areal bottom (4) of the spring link (10) in the region encompassing the spring seat (S) by means of a topological quantity defined by the number of segments of a path providing change of sign of curvature being at least two, preferably at least four, said path being defined by a cylindrical section of the bottom with corresponding cylinder axis being orthogonal to the xy-plane and going through the center (C) of the spring seat (S) and corresponding cylinder diameter being at least a quarter of the transversal (y) bottom width at said center, wherein
one imprint (244) is located in the bottom (4) and extends in the axial direction (x), centrally with respect to the transverse direction (y),
**characterized in that** the one imprint (244) contributes to the topological quantity and extends over the full axial length of the bottom (4),
wherein a cutout (98) is present in the bottom at the first axial end portion (8) of the vehicle-side mounting portion (8a, 8b) and extends over more than half of the axial length of the portion between the bulged middle portion (6) and the axial end portion (8) of the vehicle-side mounting portion (8a, 8b), wherein the bottom (4) of the base body (11) is not areal flat but profiled by means of an imprint arrangement (240) comprised of said one imprint (244) running in axial direction (x) and being centered around center line (C_{L}), wherein the transversal width of imprint (244) is essentially constant in the bulged middle portion (6) and the depth of the imprint (244) in the bulged middle portion (6) is about three times the thickness of the bottom, wherein the imprint (244) transversally widens out in a smooth manner versus the axial end portions (7, 8) to essentially reach the full bottom width at the axial end portions (7, 8) of the bottom (4), wherein the imprint (244) is deep in a height direction (H) to form roughly 20-25% of the overall height of the spring link (10), and wherein said topological quantity is 4 (401-404) at a cylinder diameter being 50% of the transversal bottom width at said center.

4. Spring link according to any of claims 1 to 3, wherein a second topological quantity defined by the ratio ΔA:Ap of the area difference (ΔA) between the surface (A) of the bottom and the projection (Ap) of said surface (A) onto the xy-plane to said projection (Ap) is at least 2%, preferably at least 3%.

5. Spring link according any of the preceding claims, wherein said at least one imprint is manufactured by press-hardening.

6. Spring link according to any of the preceding claims, with at least an imprint having its length extension larger than its width and/or depth.

7. Spring link according to any of the preceding claims in combination with claim 1 or claim 2, with at least one imprint extending in axial direction centrally with respect to the transverse direction (y).

8. Spring link according to claim 1 or 2, wherein an/the imprint (144; 244; 747; 748) extending over more than 40% of the axial length of the bottom extends over more than 75% of, in particular over the full axial length of the bottom (4).

9. Spring link according to claim 6 in combination with claim 1 or claim 2 or according to claim 7, wherein the width extension of a central axial imprint (144; 244) widens out versus one or both axial end portions (7, 8).

10. Spring link according to any of the preceding claims, wherein one or more imprints have a width to depth ratio of larger than 0.6, preferably than 0.8, in particular than 1.0, and/or lower than 20, preferably than 16, in particular than 12.

11. Spring link according to claim 1 or 2, wherein the topological quantity is at least 6, more preferred at least 8.

12. Spring link assembly (100) comprising a spring link (10) according to any of the claims 1 to 11 and a spring pad (20) forming an interface for the spring seat (S) of the spring link (10), the spring pad (20) having a lower surface profile matching at least partially to the profile of the spring seat of the spring link by means of an at least partly complementary profile.

13. Vehicle suspension comprising a spring link (10) according to any of claims 1 to 11.

14. Vehicle suspension comprising a spring link assembly (100) according to claim 12.

## Patentansprüche

1. Federlenker (10) für eine Fahrzeugaufhängung, umfassend:
einen länglichen Basiskörper (11), der sich entlang einer axialen Richtung (x) erstreckt und einen im Wesentlichen U-förmigen Querschnitt sowie einen Flächenboden (4) aufweist, der sich entlang einer axial quer verlaufenden xy-Ebene erstreckt,
einen radseitigen Befestigungsabschnitt (7a, 7b) und einen fahrzeugseitigen Befestigungsabschnitt (8a, 8b) an jeweiligen axialen Endabschnitten (7, 8) des Basiskörpers, und
einen Federsitz (S) für Feder/Dämpfungsmittel, der an einem quer (y) nach außen gewölbten Mittelabschnitt (6) des Basiskörpers definiert ist,
wobei eine topologische Modifikation des Flächenbodens (4) des Federlenkers (10) in dem den Federsitz (S) umgebenden Bereich vorgesehen ist, mittels einer topologischen Größe, die durch die Anzahl von Pfadsegmenten (410, ... 416) definiert ist, in denen eine Änderung des Vorzeichens der Krümmung auftritt, und die zumindest zwei, vorzugsweise zumindest vier beträgt, wobei der Pfad durch einen zylindrischen Teilbereich des Bodens mit entsprechender Zylinderachse orthogonal zur xy-Ebene und durch den Mittelpunkt (C) des Federsitzes (S) und entsprechendem Zylinderdurchmesser von zumindest einem Viertel der Querbreite (y) des Bodens in diesem Mittelpunkt definiert ist,
wobei zumindest eine im Boden (4) angeordnete Prägung (144; 244; 344; 444; 747, 748) zur topologischen Größe beiträgt, wobei sich zumindest eine Prägung (144; 244; 344; 444; 747, 748) in axialer Richtung (x) erstreckt,
**dadurch gekennzeichnet, dass** sich eine Prägung (144; 244; 747, 748) über mehr als 40 %, insbesondere über mehr als 60 % der axialen Länge des Bodens erstreckt.

2. Federlenker (10) für eine Fahrzeugaufhängung, umfassend:
einen länglichen Basiskörper (11), der sich entlang einer axialen Richtung (x) erstreckt und einen im Wesentlichen U-förmigen Querschnitt sowie einen Flächenboden (4) aufweist, der sich entlang einer axial quer verlaufenden xy-Ebene erstreckt,
einen radseitigen Befestigungsabschnitt (7a, 7b) und einen fahrzeugseitigen Befestigungsabschnitt (8a, 8b) an jeweiligen axialen Endabschnitten (7, 8) des Basiskörpers, und
einen Federsitz (S) für Feder/Dämpfungsmittel, der an einem quer (y) nach außen gewölbten Mittelabschnitt (6) des Basiskörpers definiert ist,
wobei eine topologische Modifikation des Flächenbodens (4) des Federlenkers (10) in dem den Federsitz (S) umgebenden Bereich vorgesehen ist, mittels einer topologischen Größe, die durch die Anzahl von Pfadsegmenten (410, ... 416) definiert ist, in denen eine Änderung des Vorzeichens der Krümmung auftritt, und die zumindest zwei beträgt, wobei der Pfad durch einen zylindrischen Teilbereich des Bodens mit entsprechender Zylinderachse orthogonal zur xy-Ebene und durch den Mittelpunkt (C) des Federsitzes (S) und entsprechendem Zylinderdurchmesser von zumindest einem Viertel der Querbreite (y) des Bodens in diesem Mittelpunkt definiert ist,
wobei eine Vielzahl von in axialer Richtung verlaufenden und eine Prägungsanordnung mit streifenförmiger Konfiguration formenden Prägungen (344, 347, 348; 747, 748) vorgesehen sind,
**dadurch gekennzeichnet, dass** für die streifenförmige Konfiguration die topologische Menge zumindest 6 beträgt und für den entsprechenden Zylinderdurchmesser ein Drittel der Querbreite (y) des Bodens in der Mitte gilt.

3. Federlenker (10) für eine Fahrzeugaufhängung, umfassend:
einen länglichen Basiskörper (11), der sich entlang einer axialen Richtung (x) erstreckt und einen im Wesentlichen U-förmigen Querschnitt sowie einen Flächenboden (4) aufweist, der sich entlang einer axial quer verlaufenden xy-Ebene erstreckt,
einen radseitigen Befestigungsabschnitt (7a, 7b) und einen fahrzeugseitigen Befestigungsabschnitt (8a, 8b) an jeweiligen axialen Endabschnitten (7, 8) des Basiskörpers, und
einen Federsitz (S) für Feder/Dämpfungsmittel, der an einem quer (y) nach außen gewölbten Mittelabschnitt (6) des Basiskörpers definiert ist,
wobei eine topologische Modifikation des Flächenbodens (4) des Federlenkers (10) in dem den Federsitz (S) umgebenden Bereich vorgesehen ist, mittels einer topologischen Größe, die durch die Anzahl von Pfadsegmenten eines Pfades definiert ist, in denen eine Änderung des Vorzeichens der Krümmung auftritt, und die zumindest zwei, vorzugsweise zumindest vier beträgt, wobei der Pfad durch einen zylindrischen Teilbereich des Bodens mit entsprechender Zylinderachse orthogonal zur xy-Ebene und durch den Mittelpunkt (C) des Federsitzes (S) und entsprechendem Zylinderdurchmesser von zumindest einem Viertel der Querbreite (y) des Bodens in diesem Mittelpunkt definiert ist, wobei
eine Prägung (244) in dem Boden (4) angeordnet ist und sich in axialer Richtung (x) zentral in Bezug auf die Querrichtung (y) erstreckt,
**dadurch gekennzeichnet, dass** die eine Prägung (244) zu der topologischen Menge beiträgt und sich über die gesamte axiale Länge des Bodens erstreckt,
wobei am Boden am axialen Endabschnitt (8) des fahrzeugseitigen Befestigungsabschnitts (8a, 8b) ein Ausschnitt (98) vorhanden ist, der sich über mehr als die Hälfte der axialen Länge des Abschnitts zwischen dem gewölbten Mittelabschnitt (6) und dem axialen Endabschnitt (8) des fahrzeugseitigen Befestigungsabschnitts erstreckt, wobei der Boden (4) des Basiskörpers (11) nicht flächig abgeflacht, sondern mittels einer aus der einen in axialer Richtung (x) verlaufenden und um die Mittellinie (C_{L}) zentrierten Prägung (244) umfassenden Prägungsanordnung (240) profiliert ist, wobei die Querbreite der Prägung (244) im gewölbten Mittelabschnitt (6) im Wesentlichen konstant ist und die Tiefe der Prägung (244) im gewölbten Mittelabschnitt (6) etwa das Dreifache der Dicke des Bodens beträgt, wobei sich die Prägung (244) gegenüber den axialen Endabschnitten (7, 8) des Bodens (4) in Querrichtung glatt verbreitert, wobei die Prägung (244) in Höhenrichtung (H) tief ist, so dass sie etwa 20 bis 25 % der Gesamthöhe des Federlenkers (10) bildet, und wobei die topologische Menge bei einem Zylinderdurchmesser, der 50 % der Querbreite des Bodens an der Mitte beträgt, 4 (401-404) ist.

4. Federlenker nach einem der Ansprüche 1 bis 3, wobei eine zweite topologische Menge, die durch das Verhältnis ΔA: Ap der Flächendifferenz (ΔA) zwischen der Oberfläche der Oberfläche (A) des Bodens und der Projektion (Ap) der Oberfläche (A) auf die xy-Ebene zu der Projektion (Ap) definiert ist, zumindest 2 %, vorzugsweise zumindest 3 % beträgt.

5. Federlenker nach einem der vorhergehenden Ansprüche, wobei die zumindest eine Prägung, durch Presshärten hergestellt ist.

6. Federlenker nach einem der vorhergehenden Ansprüche, mit zumindest einer Prägung, deren Längserstreckung größer ist als ihre Breite und/oder Tiefe.

7. Federlenker nach einem der vorhergehenden Ansprüche in Kombination mit Anspruch 1 oder Anspruch 2, mit zumindest einer Prägung, die sich in axialer Richtung (x) zentral bezüglich der Querrichtung (y) erstreckt.

8. Federlenker nach Anspruch 1 oder 2, wobei eine/die sich über mehr als 40 % der axialen Länge des Bodens erstreckende Prägung (144; 244; 747, 748) sich über mehr als 75 %, insbesondere über die gesamte axiale Länge des Bodens (4) erstreckt.

9. Federlenker nach Anspruch 6 in Kombination mit Anspruch 1 oder Anspruch 2 oder nach Anspruch 7, wobei die Breitenausdehnung einer zentralen axialen Prägung (144; 244) gegenüber einem oder beiden axialen Endabschnitten (7, 8) verbreitert ist.

10. Federlenker nach einem der vorhergehenden Ansprüche, wobei eine oder mehrere Prägungen ein Verhältnis von Breite zu Tiefe von größer als 0,6, vorzugsweise als 0,8, insbesondere als 1,0, und/oder kleiner als 20, vorzugsweise als 16, insbesondere als 12 aufweisen.

11. Federlenker nach Anspruch 1 oder 2, wobei die topologische Menge zumindest 6, vorzugsweise zumindest 8 beträgt.

12. Federlenkeranordnung (100), umfassend einen Federlenker (10) nach einem der Ansprüche 1 bis 11 und ein Federlager (20), das eine Schnittstelle für den Federsitz (S) des Federlenkers (10) bildet, wobei das Federlager (20) eine untere Oberflächenprofilierung aufweist, die mittels einer zumindest teilweise komplementären Profilierung zumindest teilweise auf die Profilierung des Federsitzes des Federlenkers abgestimmt ist.

13. Fahrzeugaufhängung, umfassend einen Federlenker (10) nach einem der Ansprüche 1 bis 11.

14. Fahrzeugaufhängung, umfassend eine Federlenkeranordnung (100) nach Anspruch 12.

## Revendications

1. Bras de suspension à ressort (10) pour suspension de véhicule, comprenant :
un corps de base (11) allongé s'étendant dans une direction axiale (x) et présentant une section transversale sensiblement en forme de U et une surface de fond (4) s'étendant selon un plan axial-transversal xy,
une partie de montage côté roue (7a, 7b) et une partie de montage côté véhicule (8a, 8b) aux extrémités axiales (7, 8) respectives du corps de base, et
un siège de ressort (S) pour un ressort/moyen d'amortissement, défini au niveau d'une partie médiane (6) du corps de base qui est bombée vers l'extérieur dans la direction transversale (y) ;
étant entendu qu'une modification topologique de la surface de fond (4) du bras de suspension à ressort (10) dans la région englobant le siège de ressort (S) au moyen d'une quantité topologique définie par le nombre de segments (410, .... 416) d'un trajet fournissant un changement de signe de courbure d'au moins deux, de préférence d'au moins quatre, ledit trajet étant défini par une section cylindrique du fond dotée d'un axe de cylindre correspondant qui est orthogonal au plan xy et passe par le centre (C) du siège de ressort (S) et d'un diamètre de cylindre correspondant faisant au moins un quart de la largeur transversale (y) du fond audit centre,
au moins une empreinte (144 ; 244 ; 344 ; 444 ; 747, 748) située dans le fond (4) contribuant à la quantité topologique, au moins une empreinte (144 ; 244 ; 344 ; 444 ; 747, 748) s'étendant dans la direction axiale (x) ;
**caractérisé en ce qu'**une empreinte (144 ; 244 ; 747, 748) s'étend sur plus de 40 %, notamment sur plus de 60 % de la longueur axiale du fond.

2. Bras de suspension à ressort (10) pour suspension de véhicule, comprenant :
un corps de base (11) allongé s'étendant dans une direction axiale (x) et présentant une section transversale sensiblement en forme de U et une surface de fond (4) s'étendant selon un plan axial-transversal xy,
une partie de montage côté roue (7a, 7b) et une partie de montage côté véhicule (8a, 8b) aux extrémités axiales (7, 8) respectives du corps de base, et
un siège de ressort (S) pour un ressort/moyen d'amortissement, défini au niveau d'une partie médiane (6) du corps de base qui est bombée vers l'extérieur dans la direction transversale (y) ;
étant entendu qu'une modification topologique de la surface de fond (4) du bras de suspension à ressort (10) dans la région englobant le siège de ressort (S) au moyen d'une quantité topologique définie par le nombre de segments (410, .... 416) d'un trajet fournissant un changement de signe de courbure d'au moins deux, ledit trajet étant défini par une section cylindrique du fond dotée d'un axe de cylindre correspondant qui est orthogonal au plan xy et passe par le centre (C) du siège de ressort (S) et d'un diamètre de cylindre correspondant faisant au moins un quart de la largeur transversale (y) du fond audit centre,
étant entendu qu'il est prévu une pluralité d'empreintes (344, 347, 348 ; 747, 748) s'étendant dans la direction axiale et formant un agencement d'empreintes à configuration en forme de bande ;
**caractérisé en ce que**, relativement à ladite configuration en forme de bande, ladite quantité topologique est d'au moins 6 et est valable pour un diamètre de cylindre correspondant faisant un tiers de ladite largeur transversale (y) du fond audit centre.

3. Bras de suspension à ressort (10) pour suspension de véhicule, comprenant :
un corps de base (11) allongé s'étendant dans une direction axiale (x) et présentant une section transversale sensiblement en forme de U et une surface de fond (4) s'étendant selon un plan axial-transversal xy,
une partie de montage côté roue (7a, 7b) et une partie de montage côté véhicule (8a, 8b) aux extrémités axiales (7, 8) respectives du corps de base, et
un siège de ressort (S) pour un ressort/moyen d'amortissement, défini au niveau d'une partie médiane (6) du corps de base qui est bombée vers l'extérieur dans la direction transversale (y) ;
étant entendu qu'une modification topologique de la surface de fond (4) du bras de suspension à ressort (10) dans la région englobant le siège de ressort (S) au moyen d'une quantité topologique définie par le nombre de segments d'un trajet fournissant un changement de signe de courbure d'au moins deux, de préférence d'au moins quatre, ledit trajet étant défini par une section cylindrique du fond dotée d'un axe de cylindre correspondant qui est orthogonal au plan xy et passe par le centre (C) du siège de ressort (S) et d'un diamètre de cylindre correspondant faisant au moins un quart de la largeur transversale (y) du fond audit centre,
étant entendu qu'une empreinte (244) située dans le fond (4) et s'étendant dans la direction axiale (x), centralement par rapport à la direction transversale (y) ;
**caractérisé en ce que** l'empreinte (244) contribue à la quantité topologique et s'étend sur toute la longueur axiale du fond,
une découpe (98) étant présente dans le fond au niveau de la partie d'extrémité axiale (8) de la partie de montage côté véhicule (8a, 8b) et s'étendant sur plus de la moitié de la longueur axiale de la partie située entre la partie médiane bombée (6) et la partie d'extrémité axiale (8) de la partie de montage côté véhicule, ledit fond (4) du corps de base (11) n'ayant pas une superficie plate mais étant profilé au moyen d'un agencement d'empreinte (240) composé de ladite empreinte (244) qui s'étend dans la direction axiale (x) en étant centrée autour d'une ligne centrale (C_{L}), la largeur transversale de ladite empreinte (244) étant sensiblement constante dans la partie médiane bombée (6) et la profondeur de l'empreinte (244) dans la partie médiane bombée (6) faisant environ trois fois l'épaisseur du fond, ladite empreinte (244) allant en s'élargissant régulièrement transversalement par rapport aux parties d'extrémité axiales (7, 8) du fond (4), ladite empreinte (244) étant profonde dans une direction de hauteur (H) pour former environ 20 à 25 % de la hauteur globale du bras de suspension à ressort (10), et ladite quantité topologique étant de 4 (401 à 404) à un diamètre de cylindre faisant 50 % de la largeur transversale du fond audit centre.

4. Bras de suspension à ressort selon l'une quelconque des revendications 1 à 3, dans lequel une deuxième quantité topologique, définie par le rapport ΔA:Ap de la différence de superficie (ΔA) entre la surface (A) du fond et la projection (Ap) de ladite surface (A) sur le plan xy à ladite projection (Ap), est d'au moins 2 %, de préférence d'au moins 3 %.

5. Bras de suspension à ressort selon l'une quelconque des revendications précédentes, dans lequel ladite au moins une empreinte est fabriquée par durcissement à la presse.

6. Bras de suspension à ressort selon l'une quelconque des revendications précédentes, comportant au moins une empreinte ayant une extension en longueur supérieure à sa largeur et/ou à sa profondeur.

7. Bras de suspension à ressort selon l'une quelconque des revendications précédentes en combinaison avec la revendication 1 ou la revendication 2, comportant au moins une empreinte s'étendant dans la direction axiale (x) de manière centrée par rapport à la direction transversale (y)^{.}

8. Bras de suspension à ressort selon la revendication 1 ou 2, dans lequel une/l'empreinte (144 ; 244 ; 747, 748) s'étendant sur plus de 40 % de la longueur axiale du fond s'étend sur plus de 75 %, notamment sur toute la longueur axiale du fond (4).

9. Bras de suspension à ressort selon la revendication 6 en combinaison avec la revendication 1 ou la revendication 2 ou selon la revendication 7, dans lequel l'étendue en largeur d'une empreinte axiale centrale (144 ; 244) va en s'élargissant par rapport à une ou aux deux parties d'extrémité axiales (7, 8).

10. Bras de suspension à ressort selon l'une quelconque des revendications précédentes, dans lequel une ou plusieurs empreintes présentent un rapport largeur/profondeur supérieur à 0,6, de préférence à 0,8, plus particulièrement à 1,0, et/ou inférieur à 20, de préférence à 16, plus particulièrement à 12.

11. Bras de suspension à ressort selon la revendication 1 ou 2, dans lequel la quantité topologique est d'au moins 6, plus préférablement d'au moins 8.

12. Ensemble à bras de suspension à ressort (100) comprenant un bras de suspension à ressort (10) selon l'une quelconque des revendications 1 à 11 et un bloc pour ressort (20) formant une interface pour le siège de ressort (S) du bras de suspension à ressort (10), le bloc pour ressort (20) ayant un profil de surface inférieure correspondant au moins partiellement au profil du siège de ressort du bras de suspension à ressort grâce à un profil au moins partiellement complémentaire.

13. Suspension de véhicule comprenant un bras de suspension à ressort (10) selon l'une quelconque des revendications 1 à 11.

14. Suspension de véhicule comprenant un ensemble de liaison à ressort (100) selon la revendication 12.
